# FASCICULE DE BREVET EUROPEEN

(11) **EP 4 416 782 B1**
(45) Date de publication et mention de la délivrance du brevet: **30.07.2025**
(21) Numéro de dépôt: 22800612.8
(22) Date de dépôt: 03.10.2022
(51) Int. Cl.: H01M 8/248, H01M 8/2483

(54) **PILE À COMBUSTIBLE COMPRENANT UNE PLAQUE TERMINALE COMPRENANT UN DISPOSITIF PRINCIPAL ET UN DISPOSITIF AUXILIAIRE, PROCÉDÉ D'ACCÈS À UNE CHEMINÉE D'UNE PILE À COMBUSTIBLE**
BRENNSTOFFZELLE MIT EINER ENDPLATTE MIT EINER HAUPTVORRICHTUNG UND EINER HILFSVORRICHTUNG, VERFAHREN ZUM ZUGRIFF AUF EINEN BRENNSTOFFZELLENVERTEILER
FUEL CELL COMPRISING AN END PLATE COMPRISING A MAIN DEVICE AND AN AUXILIARY DEVICE, METHOD FOR ACCESSING A FUEL CELL MANIFOLD

(30) Priorité: 11.10.2021 FR 2110717
(43) Date de publication de la demande: 21.08.2024
(73) Titulaire: Safran Power Units, 31200 Toulouse (FR)
(72) Inventeur: QUINTON, Romain, 77550 MOISSY-CRAMAYEL (FR); ABBOU, Sofyane, 77550 MOISSY-CRAMAYEL (FR); BUSO, Patrice, Daniel, Claude, 77550 MOISSY-CRAMAYEL (FR)
(74) Mandataire: Argyma
(86) Numéro de dépôt international: PCT/EP2022/077483
(87) Numéro de publication internationale: WO 2023/061792

(56) Documents cités:
- US-A1- 2003 203 265
- US-A1- 2005 095 485
- US-A1- 2019 334 194

## Description

### Domaine technique

La présente invention concerne le domaine de la réparation des piles à combustible, en particulier, embarquées dans un aéronef afin de fournir de l'énergie propulsive et non propulsive.

Une pile à combustible permet de produire de l'énergie électrique à partir d'une réaction électrochimique entre différents fluides. De manière classique, une pile à combustible est alimentée en hydrogène et en oxygène qui réagissent dans la pile à combustible afin de générer de l'énergie électrique. Une pile à combustible comprend un empilement comprenant une pluralité de cellules alignées selon un axe d'empilement. L'empilement des cellules, désigné « Stack » en langue anglaise, permet la réaction électrochimique à partir des fluides.

Chaque cellule comprend un électrolyte conducteur d'ions entouré de deux électrodes qui sont elles-mêmes entourées de plaques d'interconnexion. A titre d'exemple, dans le cas d'une pile à combustible du type à membrane d'échange de protons connu sous son abréviation anglaise PEMFC pour « Proton Exchange Membrane Fuel Cell », l'électrolyte se présente sous la forme d'une membrane polymère conductrice de protons et les électrodes se présentent sous la forme d'un milieu poreux porteur d'un catalyseur tel que du platine. L'ensemble électrolyte et électrodes est appelé Assemblage Membrane Electrode, connu sous son abréviation AME. Chaque AME est mis au contact de gaz réactifs sur ses deux faces opposées (par exemple de l'hydrogène et de l'oxygène éventuellement contenus dans l'air) grâce aux plaques d'interconnexion pour former une cellule.

De manière connue, l'assemblage de deux plaques d'interconnexion, appartenant à deux cellules adjacentes, est appelé plaque bipolaire. Ainsi, une plaque bipolaire se retrouve intercalée entre la cathode d'un AME et l'anode de l'AME adjacent. Une plaque bipolaire alimente, d'une part un premier AME du côté anodique en combustible (hydrogène) et, d'autre part, un deuxième AME du côté cathodique en comburant (oxygène). De manière générale, chaque plaque bipolaire comporte un circuit interne de refroidissement dans lequel circule un fluide caloporteur servant à apporter de la chaleur ou extraire la chaleur produite par la réaction exothermique.

Le courant généré par les cellules est récupéré aux deux extrémités de l'empilement par des plaques conductrices dites collecteurs. La puissance électrique délivrée par la pile à combustible est fonction du nombre de cellules (capacité de tension délivrée), de la surface active des cellules (capacité d'intensité délivrée) et des débits des fluides réactifs (importance de la réaction électrochimique qui produit le courant).

L'ensemble de l'empilement de cellules est maintenu comprimé entre deux plaques dites terminales reliées par des tirants qui maintiennent l'ensemble et garantissent l'étanchéité de l'empilement. Cette étanchéité est assurée grâce à des joints intercalés entre les plaques bipolaires et les AME des cellules. Les plaques terminales sont classiquement massives car elles doivent appliquer une pression uniforme sur la surface des cellules et être stables dimensionnellement sous l'effet de la pression interne de la pile et des variations de température.

Les fluides réactifs et caloporteur sont introduits et évacués au niveau des plaques terminales qui les distribuent dans des cheminées de circulation traversant l'empilement. Ces cheminées de circulation résultent de l'empilement d'ouvertures formées dans les cellules. A titre d'exemple, trois cheminées introduisent les fluides d'un côté de l'empilement (deux fluides réactif et un fluide caloporteur si nécessaire) pour transiter dans les cellules tandis que trois autres cheminées évacuent les fluides d'un autre côté de l'empilement.

Les documents US2005095485A1, US2019334194A1 et US2003203265A1 décrivent des empilements de piles à combustible. En référence à la [Fig.1], il est représenté une pile à combustible 101 comprenant un empilement 102 comprenant une pluralité de cellules alignées selon un axe d'empilement X. Des tirants 104 relient une portion extérieure des plaques terminales 103 de manière périphérique afin d'appliquer un effort de compression constant sur l'empilement 102. Les plaques terminales 103 comportent des conduites de circulation 130 qui débouchent dans les cheminées de circulation de l'empilement 102.

Lors de la réaction électrochimique dans la pile à combustible 101, les fluides réactifs se chargent avec des traces d'acide rentrant dans la composition des AME. Ces traces d'acide phosphorique sont présentes dans les cheminées de circulation correspondant aux sorties des deux circuits de fluides combustibles, en particulier, sous forme de vapeur d'eau dans le cas d'une pile à combustible haute température. Cet acide peut cristalliser, en particulier lors d'une étape de démarrage/arrêt de la pile à combustible pendant laquelle la température est inférieure à la température normale de fonctionnement, ce qui peut obturer les cheminées de circulation. Une telle obturation est susceptible d'entraîner des endommagements pouvant conduire à la création de points chauds avec un risque de perforation de l'AME. Outre une perte de rendement de la pile à combustible, la probabilité de risques de feu et de fuite est augmentée

Afin d'éviter un dysfonctionnement de la pile à combustible 101, les cheminées de circulation de l'empilement 102 doivent être inspectées et nettoyées. En pratique, il est nécessaire de retirer les plaques terminales 103 pour accéder aux cheminées de l'empilement 102, de nettoyer les cheminées et de replacer les plaques terminales 103. Le retrait des plaques terminales 103 entraine une perte de pression qui déstructure irrémédiablement l'empilement 102 des cellules en entrainant une perte globale d'étanchéité, une pollution des membranes par du fluide caloporteur et un désalignement des cellules de l'empilement 102. Autrement dit, un nettoyage des cheminées peut entrainer des désavantages importants qui excluent toute remise en service de la pile à combustible 101.

Une solution immédiate serait d'inspecter les cheminées par les conduites de circulation 130 formées dans les plaques terminales 103 mais ces conduites de circulation 130 possèdent généralement un diamètre plus faible que le diamètre des cheminées, ce qui empêche une inspection/nettoyage optimal.

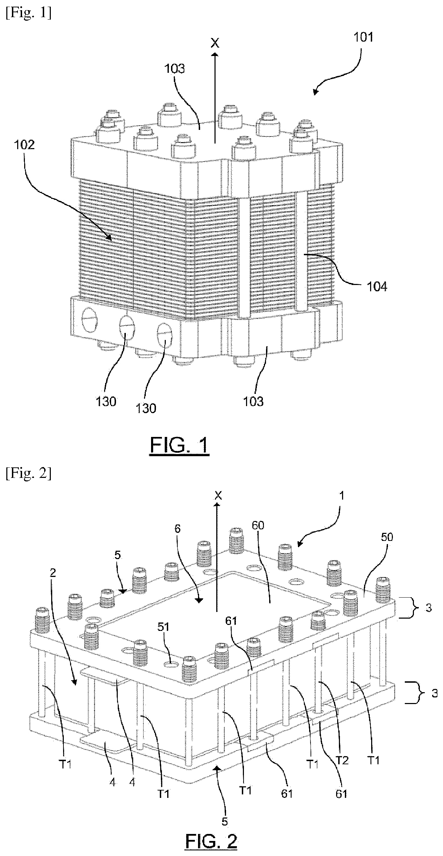

De plus, les conduites de circulation 130 formées dans les plaques terminales 103 peuvent être coudées ([Fig.1]), ce qui rend impossible le passage d'outils pour l'inspection ou le nettoyage, par exemple, un endoscope ou une pipette avec de la résine.

Un objectif de la présente invention est de permettre d'inspecter et de nettoyer une cheminée de circulation d'un empilement de manière pratique et rapide sans détériorer la structure de l'empilement.

### PRESENTATION DE L'INVENTION

L'invention concerne une pile à combustible comprenant un empilement comprenant une pluralité de cellules alignées selon un axe d'empilement X et une pluralité de cheminées de circulation de fluide dans l'empilement, deux plaques terminales placées aux extrémités de l'empilement selon l'axe d'empilement X, et une pluralité d'organes de traction reliant les plaques terminales entre elles afin de comprimer l'empilement.

La pile à combustible est remarquable en ce qu'au moins une plaque terminale comporte :
- un dispositif principal comprenant un corps principal comportant au moins une ouverture d'accès alignée avec une cheminée de circulation et au moins un organe de traction principal configuré pour appliquer une compression principale au corps principal de manière à plaquer le corps principal contre l'empilement au niveau de la cheminée de circulation de l'empilement et
- un dispositif auxiliaire comprenant un corps auxiliaire et au moins un organe de traction auxiliaire configuré pour appliquer une compression auxiliaire au corps auxiliaire de manière à plaquer le corps auxiliaire contre l'empilement, la compression auxiliaire étant appliquée à distance de la cheminée de circulation de l'empilement, le dispositif principal étant monté de manière amovible par rapport au dispositif auxiliaire, le dispositif principal étant configuré pour être retiré lorsque l'organe de traction auxiliaire applique une compression auxiliaire au corps auxiliaire.

Grâce à l'invention, la plaque terminale est configurée pour appliquer deux compressions distinctes et indépendantes. Le dispositif principal peut être enlevé de manière amovible afin de dégager l'accès aux cheminées de circulation. De manière avantageuse, le dispositif auxiliaire permet d'assurer une compression suffisante évitant de déstructurer l'empilement. Une perte d'étanchéité, d'alignement ou une pollution de l'empilement sont avantageusement évitées. Etant donné que la compression auxiliaire est réalisée à distance de la cheminée de circulation, le dispositif auxiliaire ne gêne pas l'accès à la cheminée de circulation, ce qui permet un nettoyage pratique de cette dernière.

De préférence, chaque plaque terminale comporte un dispositif principal et un dispositif auxiliaire. Les plaques terminales possèdent de manière avantageuse une structure identique pour assurer une compression homogène. Les organes de traction principale sont montés entre des dispositifs principaux opposés. Les organes de traction auxiliaire sont montés entre des dispositifs auxiliaires opposés.

De manière préférée, l'empilement comportant une partie centrale et une partie périphérique dans laquelle sont formées les cheminées de circulation, le corps auxiliaire est configuré pour appliquer la compression auxiliaire majoritairement sur la partie centrale de l'empilement. Ainsi, la compression auxiliaire est appliquée à distance des cheminées de circulation.

Selon un aspect de l'invention, le corps auxiliaire comporte une partie centrale et au moins une languette s'étendant en saillie par rapport à la partie centrale, l'organe de traction auxiliaire étant monté dans la languette. La languette permet de réaliser une traction sans traverser l'empilement, de manière extérieure à cette dernière. L'organe de traction auxiliaire exerce un effort sur la languette sans exercer d'effort sur le dispositif principal.

De préférence, l'empilement comportant une partie centrale et une partie périphérique dans laquelle sont formées les cheminées de circulation, le corps principal est configuré pour appliquer la compression principale majoritairement sur la partie périphérique de l'empilement. Ainsi, la compression principale permet d'exercer une contrainte directement sur les cheminées de circulation.

De préférence, le corps principal comporte une empreinte configurée pour coopérer par complémentarité de formes avec le corps auxiliaire de manière à ce que la plaque terminale applique un effort plan réparti.

De manière préférée, la compression principale est supérieure à la compression auxiliaire afin d'assurer une compression uniforme élevée.

De préférence, le corps principal est périphérique afin d'appliquer un effort sur les cheminées de circulation. Selon un aspect, le corps principal recouvre partiellement le corps auxiliaire afin d'appliquer un effort complémentaire à l'empilement sur des parties distinctes. Selon un autre aspect, le corps principal recouvre entièrement le corps auxiliaire

Selon un aspect de l'invention, le corps auxiliaire comprend des mailles configurées pour appliquer la compression auxiliaire sur l'empilement, les mailles définissant des ouvertures à travers lesquelles les cheminées de circulation sont accessibles. Ainsi, le corps auxiliaire permet d'exercer un effort de compression qui est réparti sur l'empilement tout en assurant l'accessibilité aux cheminées de circulation à travers les mailles.

De préférence, l'ouverture d'accès possède une section inférieure à celle de la cheminée de circulation. Ainsi, le corps principal peut exercer un effort de compression principal sur toute la périphérie de la cheminée de circulation.

De manière préférée, l'organe de traction auxiliaire se présente sous la forme d'une lame de ressort configurée pour générer la compression auxiliaire. L'utilisation d'une pluralité de lames de ressort permet d'exercer une pluralité d'efforts de compression indépendants et répartis.

De préférence, la plaque terminale est configurée pour ne plus engendrer de tension dans les organes de traction auxiliaire lors de la compression réalisée par les organes de traction principale. Les organes de traction auxiliaire sont configurés pour être amovibles lorsque le dispositif principal est en place.

Selon un aspect de l'invention, le corps auxiliaire comporte au moins une gouttière sur laquelle est montée la lame de ressort. Les lames de ressorts peuvent être montées/ démontées de manière pratique sans outil. Les lames de ressort peuvent s'accommoder à la mise en pression de l'empilement et être retirées une fois le dispositif principal monté.

L'invention concerne également un procédé d'accès à au moins une cheminée de circulation d'un empilement d'une pile à combustible telle que présentée précédemment, les plaques terminales comprimant l'empilement, au moins une plaque terminale comprenant un dispositif principal appliquant une compression principale plaquant le corps principal contre l'empilement au niveau de la cheminée de circulation de l'empilement et un dispositif auxiliaire appliquant une compression auxiliaire plaquant le corps auxiliaire contre l'empilement à distance de la cheminée de circulation de l'empilement, procédé comprenant une étape consistant à :
- Retirer le dispositif principal afin d'arrêter la compression principale de manière à découvrir un accès à la cheminée de circulation, le dispositif auxiliaire maintenant la compression auxiliaire.

La compression auxiliaire est appliquée en périphérie des cheminées de circulation et à distance de celles-ci, ce qui permet d'éviter une déstructuration de l'empilement sans gêner l'accès aux cheminées de circulation.

De manière préférée, le procédé comporte une étape d'inspection de la cheminée de circulation suite au retrait du dispositif principal, en particulier, afin de réaliser un nettoyage ou une réparation.

L'invention concerne également un procédé comprenant, préalablement à l'étape de retrait, une étape consistant à :
- Mettre en place un organe de traction auxiliaire pour appliquer une compression auxiliaire plaquant le corps auxiliaire du dispositif auxiliaire contre l'empilement à distance de la cheminée de circulation de l'empilement.

De préférence, l'organe de traction auxiliaire est monté entre deux dispositifs auxiliaires appartenant à des plaques terminales opposées.

De manière avantageuse, l'organe de traction auxiliaire n'est mis en place que lors d'une opération de maintenance, ce qui permet de limiter la masse et le coût de la pile à combustion lors de son fonctionnement usuel. Un même organe de traction auxiliaire peut avantageusement être utilisé pour différentes piles à combustible.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La [Fig.1] est une représentation schématique d'une pile à combustible selon l'art antérieur.
La [Fig.2] est une représentation schématique d'une pile à combustible selon une première forme de réalisation.
La [Fig.3] est une représentation schématique d'une partie rapprochée d'une portion d'une plaque terminale comprenant un dispositif principal et un dispositif auxiliaire.
La [Fig.4] est une représentation schématique de la [Fig.3] sans le dispositif principal.
La [Fig.5] est une représentation schématique de la [Fig.3] sans le dispositif auxiliaire.
La [Fig.6] est une représentation schématique des cheminées de circulation de fluide formées dans un empilement.
La [Fig.7] est une représentation schématique d'une pile à combustible selon une deuxième forme de réalisation.
La [Fig.8] est une représentation schématique de la [Fig.7] sans les dispositifs principaux.
La [Fig.9] est une représentation schématique de la [Fig.7] sans les plaques collectrices et l'empilement.
La [Fig.10] est une représentation schématique d'une plaque terminale selon la deuxième forme de réalisation vue de dessous.

Il faut noter que les figures exposent l'invention de manière détaillée pour mettre en œuvre l'invention, lesdites figures pouvant bien entendu servir à mieux définir l'invention le cas échéant.

### DESCRIPTION DETAILLEE DE L'INVENTION

L'invention concerne le domaine des piles à combustible du type à membrane d'échange de protons connu sous son abréviation anglaise PEMFC pour « Proton Exchange Membrane Fuel Cell ». De manière préférée, la pile à combustible est embarquée dans un aéronef afin de fournir de l'énergie à des équipements propulsifs.

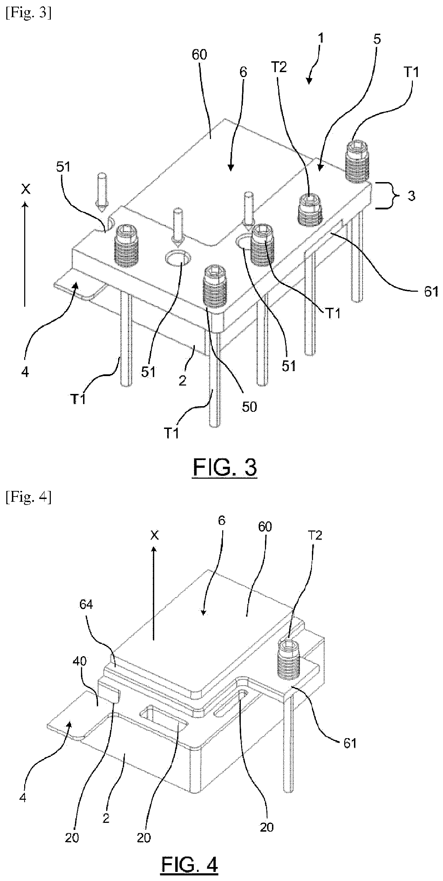

En référence à la [Fig.2], il est représenté une pile à combustible 1 comprenant un empilement 2 comprenant une pluralité de cellules alignées selon un axe d'empilement X. Chaque cellule comprend une pluralité d'ouvertures de circulation de fluide, lesdites ouvertures de circulation de fluide étant alignées parallèlement à l'axe d'empilement X afin de former une pluralité de cheminées de circulation de fluide 20 dans l'empilement 2 (figures 4 à 6).

L'empilement 2 des cellules, désigné « Stack » en langue anglaise, permet la réaction électrochimique à partir de fluides, en particulier, de l'hydrogène et de l'oxygène. Dans cet exemple, chaque cellule comprend un Assemblage Membrane Electrode, connu sous son abréviation AME. Chaque AME est mis au contact de gaz réactifs sur ses deux faces opposées (par exemple de l'hydrogène et de l'oxygène éventuellement contenus dans l'air) grâce aux plaques d'interconnexion pour former une cellule. De manière connue, l'assemblage de deux plaques d'interconnexion, appartenant à deux cellules adjacentes, est appelé plaque bipolaire. Ainsi, une plaque bipolaire se retrouve intercalée entre la cathode d'un AME et l'anode de l'AME adjacent. Ainsi, une plaque bipolaire alimente, d'une part un premier AME du côté anodique en combustible (hydrogène) et, d'autre part, un deuxième AME du côté cathodique en comburant (oxygène). De manière générale, chaque plaque bipolaire comporte un circuit interne de refroidissement dans lequel circule un fluide caloporteur servant à apporter de la chaleur ou extraire la chaleur produite par la réaction exothermique. Un tel empilement 2, formé d'une alternance d'AME et de plaques bipolaires, est connu de l'art antérieur et ne sera pas présenté plus en détails.

Dans cet exemple, en référence à la [Fig.2], la pile à combustible 1 comprend en outre des plaques collectrices 4, positionnées aux extrémités de l'empilement 2, de manière à collecter le courant généré par les cellules. De manière connue, la puissance électrique délivrée par la pile à combustible 1 est fonction du nombre de cellules (capacité de tension délivrée) et des débits des fluides réactifs (importance de la réaction électrochimique qui produit le courant).

En référence à la [Fig.2], la pile à combustible 1 comprend en outre deux plaques terminales 3 placées aux extrémités de l'empilement 2 selon l'axe d'empilement X et une pluralité d'organes de traction reliant les plaques terminales 3 entre elles afin de comprimer l'empilement 2.

Selon l'invention, en référence à la [Fig.3], au moins une plaque terminale 3 comporte :
- un dispositif principal 5 comprenant un corps principal 50 comportant au moins une ouverture d'accès 51 alignée avec une cheminée de circulation 20 ( [Fig.4]) et au moins un organe de traction principal T1 configuré pour appliquer une compression principale au corps principal 50 de manière à plaquer le corps principal 50 contre l'empilement 2 au niveau de la cheminée de circulation 20 de l'empilement 2 et
- un dispositif auxiliaire 6 comprenant un corps auxiliaire 60 et au moins un organe de traction auxiliaire T2 configuré pour appliquer une compression auxiliaire au corps auxiliaire 60 de manière à plaquer le corps auxiliaire 60 contre l'empilement 2, la compression auxiliaire étant appliquée à distance de la cheminée de circulation 20 de l'empilement 2, le dispositif principal 5 étant monté de manière amovible par rapport au dispositif auxiliaire 6.

Grâce à l'invention, on peut retirer le dispositif principal 5 pour accéder à la cheminée de circulation de fluide 20. La compression principale n'est plus appliquée à l'empilement 2 mais celui-ci n'est pas déstructuré étant donné que le dispositif auxiliaire 6 assure toujours une compression auxiliaire. Etant donné que la compression auxiliaire est réalisée à distance de la cheminée de circulation 20, le dispositif auxiliaire 6 ne gêne pas l'accès à la cheminée de circulation 20, ce qui permet un nettoyage pratique de cette dernière comme cela sera présenté par la suite.

Dans cette première forme de réalisation, en référence à la [Fig.3], le dispositif principal 5 est configuré pour recouvrir partiellement le dispositif auxiliaire 6 en position montée mais il va de soi qu'il pourrait également le recouvrir entièrement. Comme illustré à la [Fig.4], le dispositif auxiliaire 6 comporte un épaulement 64 sur lequel le dispositif principal 5 peut prendre appui pour exercer un effort. Comme cela sera présenté par la suite, l'effort de compression appliqué par le dispositif principal 5 peut compléter l'effort de compression appliqué par le dispositif auxiliaire 6 ou le supplanter entièrement.

En référence à la [Fig.3], le corps principal 50 comprend trois ouvertures d'accès 51 qui sont alignées avec les cheminées de circulation 20 de l'empilement 2. Le corps principal 50 est périphérique et comporte une ouverture intérieure dans laquelle est monté le dispositif auxiliaire 6. De manière préférée, le dispositif principal 5 comporte des conduites internes comportant chacune une ouverture d'accès 51 débouchant sur une cheminée de circulation 20 et une ouverture extérieure apte à recevoir un connecteur de fluide extérieur. Comme expliqué précédemment, les conduites internes peuvent être droites ou coudées et déboucher dans l'épaisseur du corps principal 50.

Dans cet exemple, l'empilement 2 comporte une partie périphérique dans laquelle sont formées les cheminées de circulation 20 et une partie centrale qui en est dépourvue, la partie centrale formant la zone active de l'empilement 2.

Le dispositif principal 5 comporte en outre une pluralité d'organes de traction principaux T1 de manière à appliquer une compression principale à l'empilement 2 contre les cheminées de circulation 20 de l'empilement 2. En particulier, le corps principal 50 applique un effort contre la périphérie de l'ouverture de la cheminée de circulation 20. De manière préférée, l'ouverture d'accès 51 possède une section plus faible que la cheminée de circulation 20 de manière à ce que le corps principal 50 puisse être en contact continu avec le pourtour périphérique de l'ouverture de la cheminée de circulation 20. Autrement dit, la compression principale est appliquée au voisinage immédiat des cheminées de circulation 20, ce qui assure une compression optimale. Dans cet exemple, plus d'une dizaine d'organes de traction principaux T1 sont utilisé pour assurer une compression principale qui soit répartie. Le dispositif principal 5 comporte des ouvertures de passage dans lesquels sont montés les organes de traction principaux T1, en particulier des tirants reliés à l'autre plaque terminale 3 comme illustré à la [Fig.2]. Il va néanmoins de soi que d'autres organes de traction pourraient convenir.

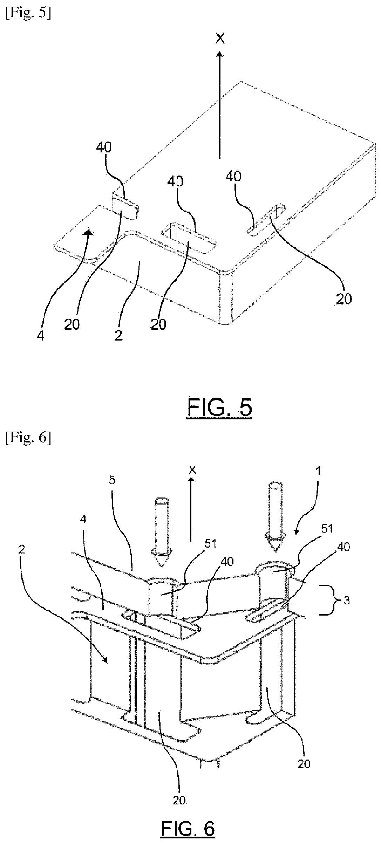

Comme illustré aux figures 4 et 5, la compression principale est appliquée aux cheminées de circulation 20 de l'empilement 2 par l'intermédiaire de la plaque collectrice 4 qui comporte des orifices 40 de manière à permettre une communication fluidique entre les ouvertures d'accès 51 et les cheminées de circulation 20 de l'empilement 2.

Dans cette première forme de réalisation, en référence aux figures 3 et 4, le dispositif auxiliaire 6 comporte un corps auxiliaire 60 configuré pour appliquer une compression auxiliaire à l'empilement 2 à distance des cheminées de circulation 20, en particulier, dans la partie centrale de l'empilement 2 selon l'axe d'empilement X. Dans cet exemple, le corps auxiliaire 60 comporte des organes de traction auxiliaire T2 se présentant sous la forme de tirants qui sont montés dans des languettes 61 s'étendant en saille du corps auxiliaire 60 et qui sont configurées pour être reliées à une autre plaque terminale 3. De manière préférée, les organes de traction auxiliaire T2 sont moins nombreux que les organes de traction principaux T1 et sont configurés pour appliquer une compression auxiliaire plus faible que la compression principale mais suffisante pour éviter une déstructuration de l'empilement 2. De manière avantageuse, le dispositif auxiliaire 6 permet d'appliquer une compression auxiliaire tout en laissant découvert l'accès aux cheminées de circulation 20 lorsque le dispositif principal 5 a été retiré de manière amovible.

Un exemple de mise en œuvre d'un procédé d'accès à une cheminée de circulation va être dorénavant présenté.

Comme illustré aux figures 2 et 3, en position initiale, la plaque terminale 3 est montée sur l'empilement 2, le dispositif auxiliaire 6 applique une compression auxiliaire de manière centrale tandis que le dispositif principal 5 applique une compression principale de manière périphérique sur l'empilement 2 selon l'axe d'empilement X. De manière avantageuse, le dispositif principal 5 permet de réaliser une compression directe de chaque cheminée de circulation 20. La compression principale est de préférence supérieure à la compression auxiliaire.

Comme présenté précédemment, le dispositif principal 5 applique la compression sur le dispositif auxiliaire 6 via l'épaulement 64 mais il va de soi que la compression pourrait être réalisée de manière distincte.

Selon un premier aspect, le dispositif principal 5 applique une compression complémentaire sur le dispositif auxiliaire 6 et tous les organes de traction T1, T2 sont sous tension lorsque le dispositif principal 5 est en place. Selon un deuxième aspect, le dispositif principal 5 applique une compression qui supplante celle du dispositif auxiliaire 6. Il en résulte que les organes de traction auxiliaire T2 ne sont pas sous tension lorsque le dispositif principal 5 est en place.

Le procédé comporte une étape consistant à désactiver les organes de traction principale T1 de manière à arrêter la compression principale et une étape consistant à retirer le dispositif principal 5. Le retrait du dispositif principal 5 entraine la disparition de la compression principale mais ne déstructure pas l'empilement 2 étant donné que le dispositif auxiliaire 6 assure encore une compression auxiliaire. De préférence, au fur et à mesure du desserrage du dispositif principal 5, les organes de traction auxiliaire T2 sont mis sous tension et reprennent de plus en plus d'efforts. La compression auxiliaire n'est pas appliquée directement sur les cheminées de circulation 20 mais à distance de ces dernières. Ainsi, les cheminées de circulation 20 sont directement accessibles pour un opérateur qui peut alors les inspecter, les nettoyer ou effectuer une réparation. L'empilement 2 demeure étanche, ce qui évite tout risque de pollution ou de désalignement des cellules de l'empilement 2.

Autrement dit, pour réaliser une opération de maintenance, le dispositif auxiliaire 6 demeure en place avec ses organes de traction auxiliaire T2, l'opérateur n'agit avantageusement que sur les organes de traction principale T1. L'opérateur peut ainsi introduire une seringue, un endoscope ou tout autre dispositif dans la cheminée de circulation 20 dont la surface intérieure est entièrement et aisément accessible.

L'utilisation d'une plaque terminale 3 avec un dispositif principal 5 amovible permet de réaliser une opération de maintenance sans risque pour la pile à combustible 1 afin notamment de retirer les éventuelles cristallisations d'acide.

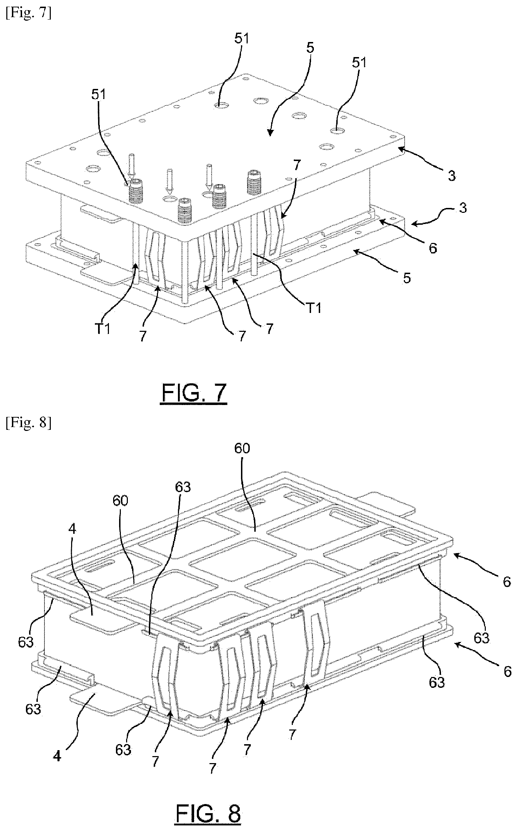

En référence aux figures 7 à 10, selon une deuxième forme de réalisation, la plaque terminale 3 possède une structure différente. En particulier, dans cette deuxième forme de réalisation, le dispositif principal 5 est configuré pour recouvrir entièrement le dispositif auxiliaire 6 en position montée comme illustré à la [Fig.7] mais il va de soi qu'il pourrait également le recouvrir partiellement.

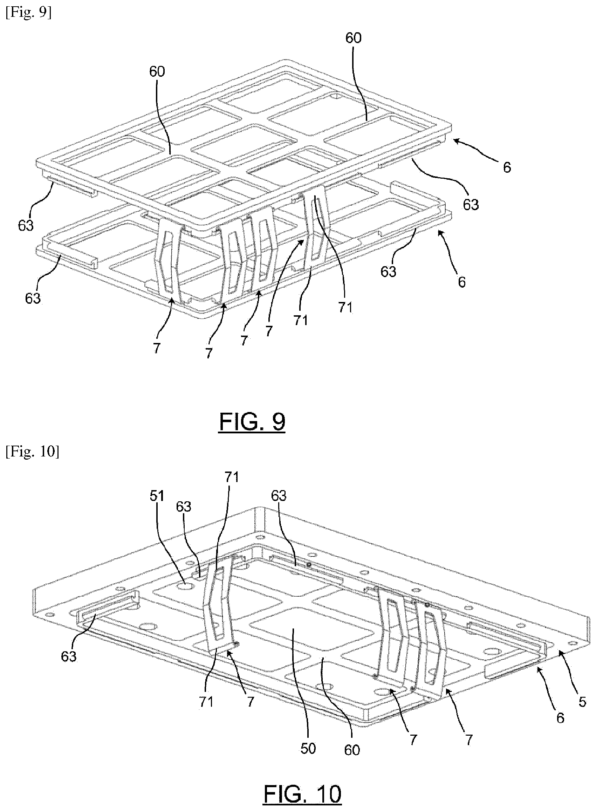

Dans cette deuxième forme de réalisation, en référence aux figures 8 et 9, le dispositif auxiliaire 6 comporte un corps auxiliaire 60 formé de mailles délimitant de manière interne des ouvertures larges depuis lesquelles les cheminées de circulation 20 sont accessibles. Dans cet exemple, le corps auxiliaire 60 s'étend jusqu' au bord périphérique de l'empilement 2 de manière à assurer une compression auxiliaire répartie, ce qui est avantageux pour assurer l'étanchéité de l'empilement 2. En référence à la [Fig.10], le corps principal 50 comporte une empreinte pour coopérer par complémentarité de formes avec le corps auxiliaire 60.

Afin d'assurer la compression auxiliaire, le dispositif auxiliaire 6 comporte des organes de traction auxiliaire T2 se présentant sous la forme de lames de ressort 7 configurées pour coopérer avec la plaque terminale opposée 3, en particulier, avec le dispositif auxiliaire 6 de la plaque terminale opposée 3 comme illustré à la [Fig.8]. Dans cet exemple, le corps auxiliaire 60 comporte plusieurs gouttières 63 sur son bord extérieur sur lesquelles sont montés les lames de ressort 7, en particulier, de manière répartie.

Comme illustré aux figures 9 et 10, chaque lame de ressort 7 possède deux extrémités 71 qui sont reliées aux gouttières 63 des dispositifs auxiliaires 6 des plaques terminales 3. Chaque extrémité 71 possède de préférence une forme de crochet de manière à pouvoir être reliée de manière pratique à une gouttière 63, en particulier, lorsque le dispositif principal 5 est en place. De manière préférée, chaque lame de ressort 7 est ajoutée afin de limiter sa masse. Les lames de ressort 7 permettent de réaliser une traction sur les gouttières 63 afin de réaliser une compression auxiliaire par les dispositifs auxiliaires 6 sur l'empilement 2. De préférence, chaque lame de ressort 7 est symétrique pour permettre un montage pratique et rapide.

Il va de soi que le corps auxiliaire 60 du dispositif auxiliaire 6 pourrait de manière alternative comporter des languettes en saillie avec des organes de traction auxiliaire T2 comme présenté pour la première forme de réalisation.

De manière analogue à précédemment, le dispositif principal 5 peut appliquer une compression complémentaire sur le dispositif auxiliaire 6 et les lames de ressort 7 sont sous tension lorsque le dispositif principal 5 est en place. De manière préférée, le dispositif principal 5 applique une compression qui supplante celle du dispositif auxiliaire 6. Il en résulte que les lames de ressort 7 ne sont pas sous tension lorsque le dispositif principal 5 est en place. Ainsi, les lames de ressort 7 peuvent être retirées lorsque le dispositif principal 5 est en place et utilisées uniquement lors des opérations de maintenance. De manière avantageuse, cela permet d'alléger la masse et de réduire le coût d'une pile à combustible. De préférence, les lames de ressort 7 peuvent être utilisées successivement avec plusieurs piles à combustible 1 différentes lors de leur maintenance.

Lors du desserrage du dispositif principal 5, la hauteur de l'empilement 2 est susceptible d'augmentée, les lames de ressort 7 s'allongeant pour compenser cette augmentation de hauteur tout en maintenant un effort de compression auxiliaire suffisant.

Un procédé d'accès à une cheminée de circulation 20 peut être mis en œuvre de manière analogue à la première forme de réalisation étant donné que le corps auxiliaire maillé 60 comporte des ouvertures permettant, d'une part, de réaliser une compression auxiliaire sur l'empilement 2 et, d'autre part, un accès aisé à chaque cheminée de circulation 20 à travers les mailles. Lors de l'opération de maintenance, les lames de ressort 7 assurent la compression auxiliaire de manière répartie garantissant une étanchéité optimale.

Grâce à l'invention, une opération de maintenance (nettoyage, réparation ou autre) peut être réalisée de manière ergonomique, pratique et rapide.

## Revendications

1. Pile à combustible (1) comprenant un empilement (2) comprenant une pluralité de cellules alignées selon un axe d'empilement X et une pluralité de cheminées de circulation de fluide (20) dans l'empilement (2), deux plaques terminales (3) placées aux extrémités de l'empilement (2) selon l'axe d'empilement X, et une pluralité d'organes de traction reliant les plaques terminales (3) entre elles afin de comprimer l'empilement (2), pile à combustible (1) **caractérisée en ce qu'**au moins une plaque terminale (3) comporte :
• un dispositif principal (5) comprenant un corps principal (50) comportant au moins une ouverture d'accès (51) alignée avec une cheminée de circulation (20) et au moins un organe de traction principal (T1) configuré pour appliquer une compression principale au corps principal (50) de manière à plaquer le corps principal (50) contre l'empilement (2) au niveau de la cheminée de circulation (20) de l'empilement (2) et
• un dispositif auxiliaire (6) comprenant un corps auxiliaire (60) et au moins un organe de traction auxiliaire (T2) configuré pour appliquer une compression auxiliaire au corps auxiliaire (60) de manière à plaquer le corps auxiliaire (60) contre l'empilement (2), la compression auxiliaire étant appliquée à distance de la cheminée de circulation (20) de l'empilement (2), le dispositif principal (5) étant monté de manière amovible par rapport au dispositif auxiliaire (6), le dispositif principal (5) étant configuré pour être retiré lorsque l'organe de traction auxiliaire (T2) applique une compression auxiliaire au corps auxiliaire (60).

2. Pile à combustible (1) selon la revendication 1 dans laquelle, l'empilement (2) comportant une partie centrale et une partie périphérique dans laquelle sont formées les cheminées de circulation (20), le corps auxiliaire (60) est configuré pour appliquer la compression auxiliaire majoritairement sur la partie centrale de l'empilement (2).

3. Pile à combustible (1) selon la revendication 2 dans laquelle, le corps auxiliaire (60) comporte une partie centrale et au moins une languette (61) s'étendant en saillie par rapport à la partie centrale, l'organe de traction auxiliaire (T2) étant monté dans la languette (61).

4. Pile à combustible (1) selon l'une des revendications 1 à 3 dans laquelle, l'empilement (2) comportant une partie centrale et une partie périphérique dans laquelle sont formées les cheminées de circulation (20), le corps principal (50) est configuré pour appliquer la compression principale majoritairement sur la partie périphérique de l'empilement (2).

5. Pile à combustible (1) selon la revendication 4, dans laquelle, le corps principal (5) est périphérique.

6. Pile à combustible (1) selon l'une des revendications 3 à 5 dans laquelle, le corps auxiliaire (60) comprend des mailles configurées pour appliquer la compression auxiliaire sur l'empilement (2), les mailles définissant des ouvertures à travers lesquelles les cheminées de circulation (20) sont accessibles.

7. Pile à combustible (1) selon l'une des revendications 1 à 6, dans laquelle l'ouverture d'accès (51) possède une section inférieure à celle de la cheminée de circulation (20).

8. Pile à combustible (1) selon l'une des revendications 1 à 7 dans laquelle l'organe de traction auxiliaire (T2) se présente sous la forme d'une lame de ressort (7) configurée pour générer la compression auxiliaire.

9. Pile à combustible (1) selon la revendication 8 dans laquelle le corps auxiliaire (60) comporte au moins une gouttière (63) sur laquelle est montée la lame de ressort (7).

10. Procédé d'accès à au moins une cheminée de circulation (20) d'un empilement (2) d'une pile à combustible (1) selon l'une des revendications 1 à 9, les plaques terminales (3) comprimant l'empilement (2), au moins une plaque terminale (3) comprenant un dispositif principal (5) appliquant une compression principale plaquant le corps principal (50) contre l'empilement (2) au niveau de la cheminée de circulation (20) de l'empilement (2) et un dispositif auxiliaire (6) appliquant une compression auxiliaire plaquant le corps auxiliaire (60) contre l'empilement (2) à distance de la cheminée de circulation (20) de l'empilement (2), procédé comprenant une étape consistant à :
• Retirer le dispositif principal (5) afin d'arrêter la compression principale de manière à découvrir un accès à la cheminée de circulation (20), le dispositif auxiliaire (6) maintenant la compression auxiliaire.

## Patentansprüche

1. Brennstoffzelle (1), die einen Stapel (2) umfasst, der eine Vielzahl von gemäß einer Stapelachse X fluchtenden Zellen und eine Vielzahl von Fluidzirkulationskanälen (20) im Stapel (2), zwei Endplatten (3), die an den Enden des Stapels (2) gemäß der Stapelachse X angeordnet sind, und eine Vielzahl von Traktionselementen, die die Endplatten (3) miteinander verbinden, um den Stapel (2) zu komprimieren, umfasst, wobei die Brennstoffzelle (1) **dadurch gekennzeichnet ist, dass** mindestens eine Endplatte (3) aufweist:
▪ eine Hauptvorrichtung (5), die einen Hauptkörper (50) umfasst, der mindestens eine Zugangsöffnung (51) aufweist, die mit einem Zirkulationskanal (20) fluchtet, und mindestens ein Haupttraktionselement (T1), das ausgelegt ist, um eine Hauptkompression auf den Hauptkörper (50) derart auszuüben, dass der Hauptkörper (50) im Bereich des Zirkulationskanals (20) des Stapels (2) gegen den Stapel (2) gedrückt wird, und
▪ eine Hilfsvorrichtung (6), die einen Hilfskörper (60) und mindestens ein Hilfstraktionselement (T2) umfasst, das ausgelegt ist, um eine Hilfskompression auf den Hilfskörper (60) derart auszuüben, dass der Hilfskörper (60) gegen den Stapel (2) gedrückt wird, wobei die Hilfskompression in einem Abstand vom Zirkulationskanal (20) des Stapels (2) ausgeübt wird, wobei die Hauptvorrichtung (5) lösbar in Bezug auf die Hilfsvorrichtung (6) angebracht ist, wobei die Hauptvorrichtung (5) ausgelegt ist, um entfernt zu werden, wenn das Hilfstraktionselement (T2) eine Hilfskompression auf den Hilfskörper (60) ausübt.

2. Brennstoffzelle (1) nach Anspruch 1, wobei, wenn der Stapel (2) einen mittleren Teil und einen Umfangsteil aufweist, in dem die Zirkulationskanäle (20) ausgebildet sind, der Hilfskörper (60) ausgebildet ist, um die Hilfskompression überwiegend auf den mittleren Teil des Stapels (2) auszuüben.

3. Brennstoffzelle (1) nach Anspruch 2, wobei, wenn der Hilfskörper (60) einen mittleren Teil und mindestens eine Zunge (61) aufweist, die in Bezug auf den mittleren Teil vorsteht, das Hilfstraktionselement (T2) in der Zunge (61) angebracht ist.

4. Brennstoffzelle (1) nach einem der Ansprüche 1 bis 3, wobei, wenn der Stapel (2) einen mittleren Teil und einen Umfangsteil aufweist, in dem die Zirkulationskanäle (20) ausgebildet sind, der Hauptkörper (50) ausgelegt ist, um den Hauptdruck überwiegend auf den Umfangsteil des Stapels (2) auszuüben.

5. Brennstoffzelle (1) nach Anspruch 4, wobei der Hauptkörper (5) peripher ist.

6. Brennstoffzelle (1) nach einem der Ansprüche 3 bis 5, wobei der Hilfskörper (60) Maschen umfasst, die ausgelegt sind, um die Hilfskompression auf den Stapel (2) auszuüben, wobei die Maschen Öffnungen definieren, durch die die Zirkulationskanäle (20) zugänglich sind.

7. Brennstoffzelle (1) nach einem der Ansprüche 1 bis 6, wobei die Zugangsöffnung (51) einen Querschnitt aufweist, der kleiner ist als der des Zirkulationskanals (20).

8. Brennstoffzelle (1) nach einem der Ansprüche 1 bis 7, wobei das Hilfstraktionselement (T2) in Form eines Federblatts (7) vorliegt, das ausgelegt ist, um die Hilfskompression zu erzeugen.

9. Brennstoffzelle (1) nach Anspruch 8, wobei der Hilfskörper (60) mindestens eine Rinne (63) aufweist, auf der das Federblatt (7) angebracht ist.

10. Verfahren für den Zugang zu mindestens einem Zirkulationskanal (20) eines Stapels (2) einer Brennstoffzelle (1) nach einem der Ansprüche 1 bis 9, wobei die Endplatten (3) den Stapel (2) komprimieren, wobei mindestens eine Endplatte (3) eine Hauptvorrichtung (5) umfasst, die eine Hauptkompression ausübt, die den Hauptkörper (50) gegen den Stapel (2) im Bereich des Zirkulationskanals (20) des Stapels (2) drückt, und eine Hilfsvorrichtung (6), die eine Hilfskompression ausübt, die den Hilfskörper (60) gegen den Stapel (2) in einem Abstand vom Zirkulationskanal (20) des Stapels (2) drückt, wobei das Verfahren einen Schritt umfasst, der darin besteht:
▪ Entfernen der Hauptvorrichtung (5), um die Hauptkompression zu beenden, so dass ein Zugang zum Zirkulationskanal (20) freigelegt wird, wobei die Hilfsvorrichtung (6) den Hilfsdruck aufrechterhält.

## Claims

1. Fuel cell (1) comprising a stack (2) comprising a plurality of cells aligned along a stack axis (X) and a plurality of fluid flow shafts (20) in the stack (2), two end plates (3) placed at the ends of the stack (2) along the stack axis (X), and a plurality of traction members connecting the end plates (3) to each other in order to compress the stack (2), fuel cell (1) **characterized in that** at least one end plate (3) comprises:
• a main device (5) comprising a main body (50) comprising at least one access opening (51) aligned with a flow shaft (20) and at least one main traction member (T1) configured to apply a main compression to the main body (50) so as to urge the main body (50) against the stack (2) at the flow shaft (20) of the stack (2) and
• an auxiliary device (6) comprising an auxiliary body (60) and at least one auxiliary traction member (T2) configured to apply an auxiliary compression to the auxiliary body (60) so as to urge the auxiliary body (60) against the stack (2), the auxiliary compression being applied at a distance from the flow shaft (20) of the stack (2), the main device (5) being mounted removably with respect to the auxiliary device (6), the main device (5) being configured to be removed when the auxiliary traction member (T2) applies an auxiliary compression to the auxiliary body (60).

2. Fuel cell (1) according to claim 1, wherein, the stack (2) comprising a central part and a peripheral part in which the flow shafts (20) are formed, the auxiliary body (60) is configured to apply the auxiliary compression mostly on the central part of the stack (2).

3. Fuel cell (1) according to claim 2 wherein, the auxiliary body (60) comprises a central part and at least one tab (61) extending protruding with respect to the central part, the auxiliary traction member (T2) being mounted in the tab (61).

4. Fuel cell (1) according to any one of claims 1 to 3, wherein, the stack (2) comprising a central part and a peripheral part in which the flow shafts (20) are formed, the main body (50) is configured to apply the main compression mostly on the peripheral part of the stack (2).

5. Fuel cell (1) according to claim 4, wherein, the main body (5) is peripheral.

6. Fuel cell (1) according to one of claims 3 to 5 wherein, the auxiliary body (60) comprises meshes configured to apply the auxiliary compression on the stack (2), the meshes defining openings through which the flow shafts (20) are accessible.

7. Fuel cell (1) according to any one of claims 1 to 6, wherein the access opening (51) has a cross-section smaller than that of the flow shaft (20).

8. Fuel cell (1) according to one of claims 1 to 7, wherein the auxiliary traction member (T2) is in the form of a spring leaf (7) configured to generate the auxiliary compression.

9. Fuel cell (1) according to claim 8, wherein the auxiliary body (60) comprises at least one gutter (63) on which the spring leaf (7) is mounted.

10. Method for accessing at least one flow shaft (20) of a stack (2) of a fuel cell (1) according to one of claims 1 to 9, the end plates (3) compressing the stack (2), at least one end plate (3) comprising a main device (5) applying a main compression urging the main body (50) against the stack (2) at the flow shaft (20) of the stack (2) and an auxiliary device (6) applying an auxiliary compression urging the auxiliary body (60) against the stack (2) at a distance from the flow shaft (20) of the stack (2), method comprising a step consisting of:
• Removing the main device (5) in order to stop the main compression so as to uncover access to the flow shaft (20), the auxiliary device (6) maintaining the auxiliary compression.
